# EUROPÄISCHE PATENTSCHRIFT

(11) **EP 1 762 133 B1**
(45) Veröffentlichungstag und Bekanntmachung des Hinweises auf die Patenterteilung: **26.01.2011**
(21) Anmeldenummer: 06018739.0
(22) Anmeldetag: 07.09.2006
(51) Int. Cl.: A01D 41/14

(54) **Dreiteiliges Getreideschneidwerk**
Three-part cutterbar for a grain harvester
Barre de coupe en trois parties pour un dispositif de récolte de graines

(30) Priorität: 13.09.2005 DE 102005043464
(43) Veröffentlichungstag der Anmeldung: 14.03.2007
(73) Patentinhaber: Carl Geringhoff GmbH & Co. KG, 59227 Ahlen (DE)
(72) Erfinder: Surmann, Klemens, 59227 Ahlen (DE); Webermann, Dirk, 48301 Nottuln (DE)
(74) Vertreter: Habbel, Hans-Georg

(56) Entgegenhaltungen:
- EP-A1- 0 634 088
- EP-A1- 1 021 944
- DE-A1- 2 026 190
- GB-A- 1 181 970
- US-A- 3 683 601

## Beschreibung

Die Erfindung bezieht sich auf ein dreiteiliges Getreideschneidwerk gemäß dem Oberbegriff des Hauptanspruches.

Eine solche Einrichtung ist z. B. in der DE 20 26 190 A1 beschrieben. Unter anderem macht bei einem solchen dreiteiligen Getreideschneidwerk die Verbindung der in den drei Schneidwerksteilen angeordneten Messerbalken miteinander Schwierigkeiten, da sichergestellt sein muß, daß eine leichte Trennung im Bereich der Schwenkachse der aneinander anschließenden Messerbalkenteile möglich ist, andererseits nach Zurückschwenken der Bauteile eine gute Verriegelung der aneinander anliegenden Messerbalkenteile gewährleistet sein muß.

Gelöst wird diese Verriegelung bei der bekannten Einrichtung durch eine formschlüssige Verriegelung mittels einer U-förmigen Klemmvorrichtung, die die beiden miteinander zu verbindenden Teile gegeneinander drückt. Diese Klemmvorrichtung ist gelenkig an einem der zu verbindenden Teile gelagert und wird nach formschlüssiger Verbindung über einen Bolzen od. dgl. gesichert.

In der US-A 5 724 798 wird ein schwenkbarer Bolzen zur Verbindung zweier aneinander anzuschließender Teile vorgeschlagen, der in einer Ausnehmung des anderen Teiles eingreift.

Bei beiden Einrichtungen wird keine Positionierung der Teile eines Messerbalkens vorgeschlagen.

Der Erfindung liegt die Aufgabe zugrunde, ein sauberes Positionieren der Teile eines Messebalkens in den Fingern des Messerbalkens in der Mittelstellung zu gewährleisten und sicherzustellen, daß die Messer im Bereich der Trennstelle positioniert sind, bevor der Klappvorgang der äußeren Messerbalkenteile erfolgt bzw. bevor das Verriegeln der äußeren Messerbalkenteile stattfindet.

Diese der Erfindung zugrundeliegende Aufgabe wird durch die Lehre des Hauptanspruches gelöst.

Mit anderen Worten ausgedrückt wird eine Messerstellvorrichtung vorgeschlagen, wobei im Bereich der jeweiligen Trennstelle die Messerbalkenteile auf beiden Seiten Hebel gelagert sind, die eine erste und eine zweite Stellvorrichtung tragen. Jeder Hebel ist um einen ortsfesten Drehpunkt schwenkbar. Die erste Stellvorrichtung kommt mit einem Schwinghebel in Kontakt, und zwar bevor die zweite Stellvorrichtung mit einer mit dieser Stellvorrichtung in Kontakt kommenden Schiebestange in Kontakt kommt.

Durch diese Anordnung wird der Schwinghebel um einen Drehpunkt geschwenkt und kommt mit einem Druckarm mit einer Messerstellvorrichtung in Kontakt, durch die nunmehr das Messer in die Mittelstellung zwischen den Messerfingern geführt wird. Anschließend gelangt die zweite Stellvorrichtung mit der Schiebestange in Kontakt und verschiebt diese gegen die Rückstellkraft einer Druckfeder, wodurch gleichzeitig sich ein entsprechender Bolzen in einer Kurvenbahn verschiebt und hierdurch einen Verriegelungshebel anhebt, der ebenfalls um einen Drehpunkt schwenkbar ist und der an seinem anderen Ende den Verriegelungsbolzen trägt. Die Betätigungsstange, die den die erste und zweite Stellvorrichtung tragenden Hebel betätigt, wird über eine hydraulische Kolbenzylinderanordnung angetrieben.

Der Verriegelungsbolzen und ein entsprechender Zentrierungsbolzen sind als Konusbolzen ausgebildet, so daß ein leichtes Einschieben der Bolzen in die zugehörigen Hülsen möglich wird. Schließlich ist es von Bedeutung, daß die eigentliche Schiebestange nur linear betätigt wird, d. h. sich linear verschiebt, aber bewirkt, daß der Verriegelungshebel um eine Drehachse geschwenkt wird.

Ein Ausführungsbeispiel der Erfindung wird nachfolgend anhand der Zeichnungen erläutert. Die Zeichnungen zeigen dabei in
- Fig. 1: eine Draufsicht auf ein mit dem Mittelteil verbundenes Messerbalkenteil, in
- Fig. 2: in größerem Maßstab die Anordnung gemäß Fig. 1 bei zentriertem Messer und angehobenem Verriegelungsbolzen und in
- Fig. 3: in größerem Maßstab die auseinandergefahrenen Messerbalkenteile.

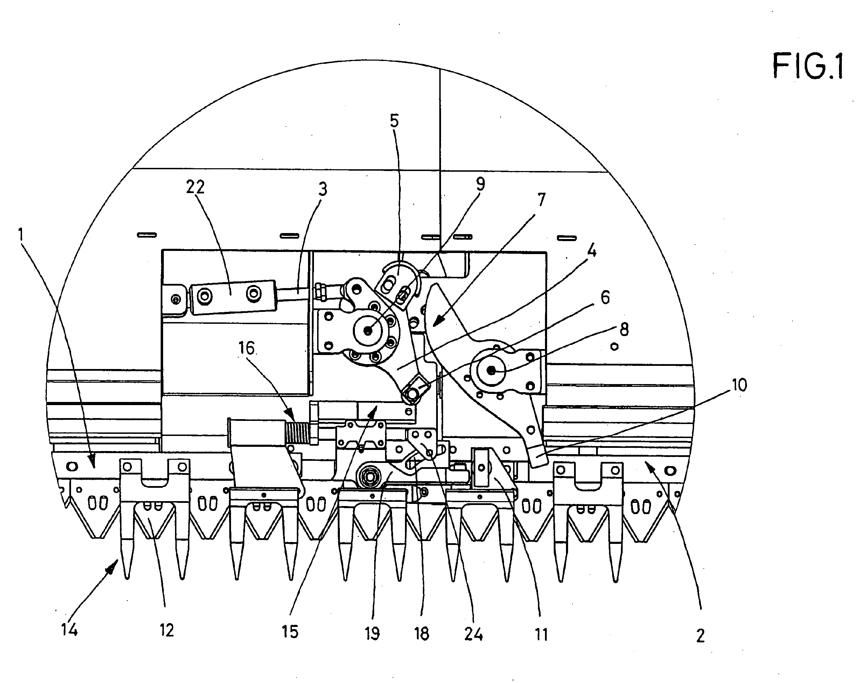

In Fig. 1 sind zwei Messerbalkenteile 1, 2 dargestellt, wobei das Messerbalkenteil 1 schwenkbar am Mittelteil des Getreideschneidwerkes gelaget ist, wobei dieses Mittelteil des Getreideschneidwerkes das Messerbalkenteil 2 trägt.

Am Messerbalkenteil 1 ist eine Betätigungsstange 3 angeordnet, die über eine hydraulische Kolbenzylinderanordnung 22 betätigt wird und diese Betätigungsstange 3 trägt an ihrem äußeren Ende einen Hebel 4, der eine erste Stellvorrichtung 5 und eine zweite Stellvorrichtung 6 trägt.

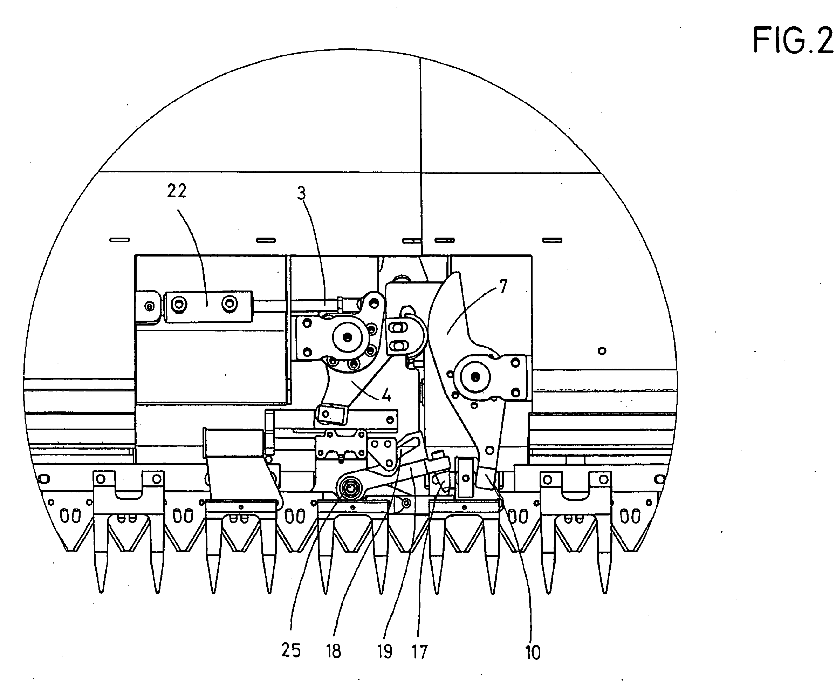

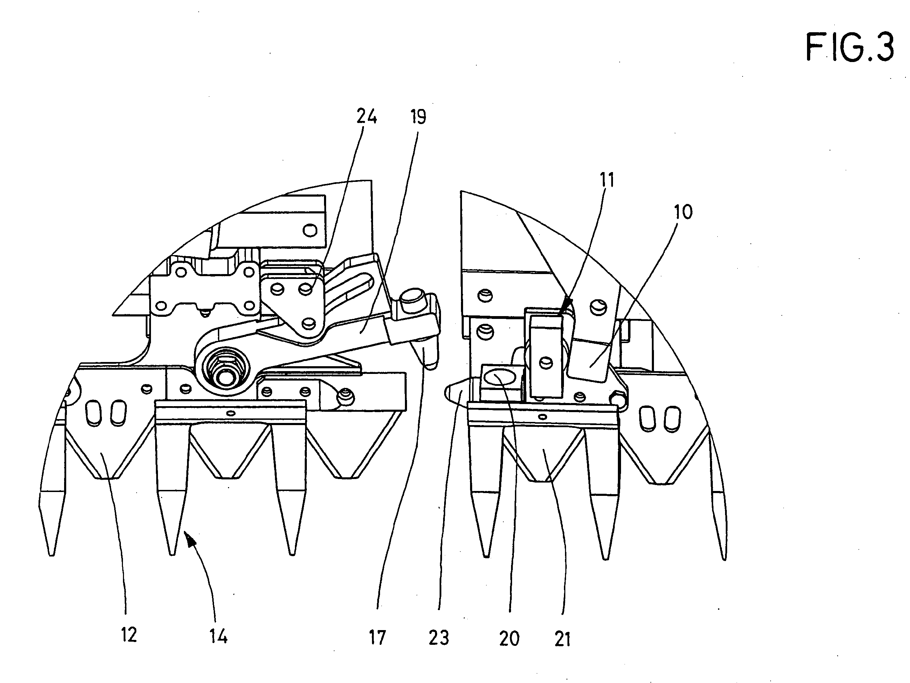

An dem feststehenden Mittelteil, welches das Messerbalkenteil 2 trägt, ist um einen Drehpunkt 8 schwenkbar gelagert ein Schwinghebel 7 angeordnet, der einen Druckarm 10 aufweist. Mit dem dem Druckarm 10 gegenüberliegenden Teil des Schwinghebels 7 kommt die erste Stellvorrichtung in Kontakt und kann also, wenn der Hebel 4 um seinen Drehpunkt 9 geschwenkt wird, nunmehr den Schwinghebel 7 um den Drehpunkt 8 drehen, so daß damit der Druckarm 10 mit einer Messerstellvorrichtung 11 in Kontakt kommen kann und diese so beaufschlagt, daß die Messer 12 in der Mittelstellung der Messerfinger 14 stehen. Diese Stellung des Druckarmes 10 ist deutlich in den Fig. 2 und 3 erkennbar.

Nachdem also der Hebel 4 über die erste Stellvorrichtung 5 den Schwinghebel 7 in die vorgenannte Stellung geführt hat, kommt die zweite Stellvorrichtung 6, die vom Hebel 4 getragen wird, mit einer Schiebestange 15 in Kontakt, wie dies deutlich in Fig. 2 dargestellt ist, und schiebt diese Schiebestange gegen die Rückstellkraft einer Druckfeder 16 in der Zeichnung nach links.

Mit der Schiebestange 15 verbunden ist ein Bolzenelement 24, wobei der Bolzen in eine Kurvenbahn 18 eingreift, die von einem Verriegelungshebel 19 getragen wird.

Wird die Schiebestange 15 aus der in Fig. 1 dargestellten Stellung in die in Fig. 2 dargestellte Stellung geführt, wird - wie dies deutlich die Fig. 2 zeigt - der Verriegelungshebel 19 angehoben. Hierbei dreht sich der Verriegelungshebel 19 um den Drehpunkt 24. Der Verriegelungshebel 19 trägt an seinem dem Drehpunkt 24 abgewandten Ende einen Verriegelungsbolzen 17, der in eine Verriegelungshülse 20 eingreifen kann (Fig. 3), die an dem Messerbalkenteil 2, also an dem feststehenden Messerbalkenteil angeordnet ist.

Durch diese Anordnung wird also erreicht, daß das Messerbalkenteil 1 nicht mehr formschlüssig mit dem Messerbalkenteil 2 verbunden ist.

Durch die Ausbildung des Verriegelungsbolzens 17 als Konusbolzen und die Ausbildung des Konusbolzens 23 wird erreicht, daß ein Zentrieren der mit diesen Bolzen verbundenen Teile beim Einschieben in die jeweiligen zugeordneten Hülsen erreicht wird.

Durch die Ausbildung des Hebels 4 und des Schwinghebels 7 wird erreicht, daß zuerst eine Zentrierung des Messerteiles 21 bewirkt wird, bevor der Verriegelungshebel 15 angehoben und damit die Kippbewegung oder Schwenkbewegung des Messerbalkenteiles 1 eingeleitet wird.

Es ist selbstverständlich, daß die vorher beschriebene Einrichtung in gleicher Weise an dem gegenüberliegenden schwenkbaren Messerbalkenteil angeordnet ist, d. h. also, wenn die Maschine von vorne gesehen wird, ist voraufstehend der linke schwenkbare Messerbalkenteil erläutert und die Gesamtvorrichtung wiederholt sich dann am rechten schwenkbaren Messerbalkenteil, ohne daß es erforderlich ist, daß die Einrichtung dort noch einmal ausführlich beschrieben wird.

## Patentansprüche

1. Getreideschneidwerk mit einer dreiteiligen Schnecke, einer dreiteiligen Haspel und einem dreiteiligen Messerbalken, wobei die beiden äußeren Bauteile klappbar und auf das Mittelteil auflegbar sind und Messerbalkenteile (1, 2) formschlüssig miteinander durch einen Verriegelungsbolzen (17) verbindbar sind, der quer zur Längserstreckung des Messerbalkens ausgerichtet ist, **gekennzeichnet durch** eine Messerstellvorrichtung (11), **durch** die die Messer (12, 21) in eine Mittelstellung zwischen den Messerfingern (14) führbar sind, bevor der von einem Messerbalkenteil (1) getragene Verriegelungsbolzen (17) in eine von dem anderen Messerbalkenteil (2) getragene Verriegelungshülse (20) einrastet.

2. Getreideschneidwerk nach Anspruch 1, **gekennzeichnet durch** einen um einen Drehpunkt (8) schwenkbaren Schwinghebel (7), der von einer Betätigungsstange (3) beaufschlagt mit einem Druckarm (10) die Messerstellvorrichtung (11) beaufschlagt bis das mit dieser Messerstellvorrichtung (11) verbundene Messerteil (21) in seiner Mittelstellung zwischen den Messerfingern (14) st eht.

3. Getreideschneidwerk nach Anspruch 2, **gekennzeichnet durch** die Betätigungsstange (3), die einen Hebel (4) mit einer ersten Stellvorrichtung (5) und einer zweiten Stellvorrichtung (6) trägt, wobei die erste Stellvorrichtung (5) den Schwinghebel (7) und die zweite Stellvorrichtung (6) eine Schiebestange (15) beaufschlagt, die über eine Kurvenbahn (18) den Verriegelungsbolzen (17) aus der Verriegelungshülse (20) bewegt.

4. Getreideschneidwerk nach Anspruch 3, **dadurch gekennzeichnet, daß** die Schiebestange (15) gegen die Rückstellkraft einer Druckfeder (16) bewegbar ist.

5. Getreideschneidwerk nach einem oder mehreren der vorhergehenden Ansprüche 2-4, **dadurch gekennzeichnet, daß** der Schwinghebel (7) mit seinem Druckarm (10) die Messerstellvorrichtung (11) beaufschlagt, bevor die die Kurvenbahn (18) tragende Schiebestange (15) von der zweiten Stellvorrichtung (6) des Schwinghebels (7) beaufschlagt wird.

6. Getreideschneidwerk nach einem oder mehreren der vorhergehenden Ansprüche 2-5, **dadurch gekennzeichnet, daß** die Betätigungsstange (3) von einer hydraulischen Kolbenzylinderanordnung (22) angetrieben ist.

7. Getreideschneidwerk nach einem oder mehreren der vorhergehenden Ansprüche 3-7, **dadurch gekennzeichnet, daß** die Schiebestange (15) nur linear verschoben wird.

8. Getreideschneidwerk nach einem oder mehreren der vorhergehenden Ansprüche, **gekennzeichnet durch** einen Konusbolzen (23) zur Zentrierung der miteinander in Kontakt kommenden Messerbalkenteile (1, 2).

9. Getreideschneidwerk nach einem oder mehreren der vorhergehenden Ansprüche, **dadurch gekennzeichnet, daß** der Verriegelungsbolzen (17) als Konusbolzen ausgebildet ist.

## Claims

1. Cereal cutter unit with a three-part worm, a three-part winding means and a three-part cutter bar, where the two outer component parts can be folded out and laid on the middle part and cutter bar parts (1,2) can be connected to each other positively by means of a locking bolt (17) which is aligned transversely to the longitudinal extent of the cutter bar, **characterised in that** a cutter positioning means (11) by means of which the cutters (12, 21) can be guided into a position midway between the cutter fingers (14), before the locking bolt (17) borne by the one cutter bar part (1) engages in a locking sleeve (20) borne by the other cutter bar part (2).

2. Cereal cutter unit in accordance with claim 1, **characterised by** a oscillating lever (7) which can be swivelled about a swivel point (8) and which, when pressure is exerted on it by an actuating rod (3), exerts pressure on the cutter positioning means (11) by means of a pressure arm (10) until the cutter part (21) connected to this cutter positioning means (11) is positioned midway between the cutter fingers (14).

3. Cereal cutter unit in accordance with claim 2, **characterised by** the actuating rod (3) which bears a lever (4) with a first positioning means (5) and a second positioning means (6), where the first positioning means (5) exerts pressure on the oscillating lever (7) and the second positioning means (6) exerts pressure on a push rod (15) which moves the locking bolt (17) out of the locking sleeve (20) by means of a cam track (18).

4. Cereal cutter unit in accordance with claim 3, **characterised in that** the push rod (15) can be moved against the restorative force of a pressure spring (16).

5. Cereal cutter unit in accordance with one or more of the foregoing claims 2 - 4, **characterised in that** the oscillating lever (7) exerts pressure on the cutter positioning means (11) by its pressure arm (10), before pressure is applied to the push rod (15) bearing the cam track (18) by the second positioning means (6) of the oscillating lever (7).

6. Cereal cutter unit in accordance with one or more of the foregoing claims 2 - 5, **characterised in that** the actuating rod (3) is driven by a hydraulic piston cylinder arrangement (22).

7. Cereal cutter unit in accordance with one or more of the foregoing claims 3 - 7, **characterised in that** the push rod (15) is displaced only linearly.

8. Cereal cutter unit in accordance with one or more of the foregoing claims, **characterised by** a conical bolt (23) for centring the cutter bar parts (1, 2) coming into contact with each other.

9. Cereal cutter unit in accordance with one or more of the foregoing claims, **characterised in that** the locking bolt (17) is constructed as a conical bolt.

## Revendications

1. Coupeuse de céréales avec une vis sans fin en trois sections, un rabatteur en trois sections et une barre de coupe en trois sections, les deux sections extérieures pouvant être rabattues et posées sur la section centrale et les sections de barre de coupe (1, 2) pouvant être reliées entre elles par adhérence de forme au moyen d'une cheville de verrouillage (17), qui est orientée perpendiculairement à l'extension longitudinale de la barre de coupe, **caractérisée par** un dispositif de réglage de lame (11) par lequel les lames (12, 21) peuvent être guidées dans une position médiane entre les pointes de lame (14), avant qu'une cheville de verrouillage (17) portée par une section de barre de coupe (1) s'engage dans une douille de verrouillage (20) portée par l'autre section de barre de coupe (2).

2. Coupeuse de céréales selon la revendication 1, **caractérisée par** un levier oscillant (7) pivotant autour d'un centre de rotation (8), qui, actionné par une barre d'actionnement (3) avec un bras de pression (10) actionne le dispositif de réglage de lame (11) jusqu'à ce que la section de lame (21) reliée à ce dispositif de réglage de lame (11) se trouve dans sa position médiane entre les pointes de lame (14).

3. Coupeuse de céréales selon la revendication 2, **caractérisée par** la barre d'actionnement (3), qui porte un levier (4) avec un premier dispositif de réglage (5) et un deuxième dispositif de réglage (6), le premier dispositif de réglage (5) agissant sur le levier oscillant (7) et le deuxième dispositif de réglage (6) sur une barre coulissante (15), qui déplace par une voie incurvée (18) la cheville de verrouillage (17) hors de la douille de verrouillage (20).

4. Coupeuse de céréales selon la revendication 3, **caractérisée en ce que** la barre coulissante (15) se déplace contre la force de rappel d'un ressort de pression (16).

5. Coupeuse de céréales selon une ou plusieurs revendications précédentes 2 à 4, **caractérisée en ce que** le levier oscillant (7) agit avec son bras de pression (10) sur le dispositif de réglage de lame (11) avant que la barre coulissante (15) portant la voie incurvée (18) soit actionnée par le deuxième dispositif de réglage (6) du levier oscillant (7).

6. Coupeuse de céréales selon une ou plusieurs revendications précédentes 2 à 5, **caractérisée en ce que** la barre d'actionnement (3) est entraînée par un dispositif hydraulique de cylindre à piston (22).

7. Coupeuse de céréales selon une ou plusieurs revendications précédentes 3 à 7, **caractérisée en ce que** la barre coulissante (15) est uniquement déplacée linéairement.

8. Coupeuse de céréales selon une ou plusieurs revendications précédentes, **caractérisée par** une cheville conique (23) pour le centrage des sections de barre de coupe (1, 2) entrant en contact l'une avec l'autre.

9. Coupeuse de céréales selon une ou plusieurs revendications précédentes, **caractérisée en ce que** la cheville de verrouillage (17) est réalisée sous forme de cheville conique.
